# EUROPÄISCHE PATENTANMELDUNG

(11) **EP 4 653 740 A1**
(43) Veröffentlichungstag der Anmeldung: **26.11.2025**
(21) Anmeldenummer: 25177205.9
(22) Anmeldetag: 19.05.2025
(51) Int. Cl.: F16L 15/04, H02G 3/22, H02G 3/04

(54) **VORRICHTUNG UND ANORDNUNG ZUM BRANDSCHUTZ VON KABEL- ODER LEITUNGSDURCHFÜHRUNGEN**

(30) Priorität: 22.05.2024 DE 102024114309; 22.05.2024 DE 202024102631 U
(71) Anmelder: Flamro Brandschutz-Systeme GmbH, 21217 Seevetal (DE)
(72) Erfinder: LÜDEMANN, Andreas, 21335 Lüneburg (DE); STAUFFER, Jürgen, 91781 Weissenburg (DE); SMOLIANOV, Vladyslav, 21423 Winsen (DE); FISCHER, Frank, 40764 Langenfeld (DE); HEINCKE, Patrick, 59846 Sundern (DE); NIED, Dominik, 74747 Ravenstein-Hüngheim (DE)
(74) Vertreter: Stüven, Ralf

(57) **Zusammenfassung**

Die Erfindung betrifft eine Brandschutzvorrichtung (1) zur Abschottung eines Durchbruchs in einer Wand oder Decke (101) zur Durchführung von Kabel- oder Leitungselementen (104), umfassend
a. einen ein Flammschutzmittel umfassenden elastischen Polymerschaumkörper (2), und
b. mindestens zwei an dem elastischen Polymerschaumkörper (2) angeordnete Haltewinkel (3) aus einem nicht-brennbaren Material zur Befestigung des elastischen Polymerschaumkörpers (2) an der Wand oder Decke (101) vor dem Durchbruch (102).

## Beschreibung

Die Erfindung betrifft eine Brandschutzvorrichtung und eine Brandschutzanordnung zur Abschottung eines Durchbruchs in einer Wand oder Decke zur Durchführung von Kabel- oder Leitungselementen.

Durchbrüche in Wänden oder Decken von Bauten sind zur Durchführung von beispielsweise Leitungen oder Kabeln erforderlich, jedoch hinsichtlich des Brandschutzes problematisch. Dies gilt besonders bei Konstruktionen in Leichtbauweise. Zum Brandschutz von Durchführungen für Kabel- oder Leitungselemente durch Wände oder Decken sind zahlreiche Lösungen aus dem Stand der Technik bekannt. Die Wand- oder Deckenöffnungen werden mit Hilfe von Schottsystemen, durch die die Kabel- oder Leitungselemente geführt werden, auf unterschiedliche Weise brandgeschützt. Bekannt sind beispielsweise Brandschutzmanschetten zum Abschotten von Wand- oder Deckenöffnungen, die vor den Öffnungen um die durchgeführten Kabel- oder Leitungselemente angeordnet sind und beispielsweise ein intumeszierendes Material umfassen, das im Brandfall aufschäumt und die Öffnung verschließt. Aus der EP 3289267 B1 ist beispielsweise eine solche Brandschutzmanschette bekannt, wobei die Brandschutzmanschette einen Rahmen und einen darin angeordneten Block aus gegebenenfalls intumeszierendem Material umfasst. Der Block ist ein regelmäßiger Polyeder, beispielsweise Quader, und kann aus einem schäumbaren Material bestehen. Weitere Brandschutzmanschetten sind aus der EP 3289265 B1, EP 3289266 B1, EP 2906304 B1, EP 2607761 B1 und EP 3567289 B1. Aus der EP 1184522 B1 ist eine Brandschutzplatte aus einem weichelastischen organischen Bindemittel mit einem darin eingebetteten grobkörnigen anorganischen Füllstoff bekannt, wobei die Platte bündig innerhalb eines Durchbruchs oder vor der Öffnung des Durchbruchs angeordnet werden kann.

Trotz der vorhandenen Lösungen besteht nach wie vor Bedarf an Lösungen zum Brandschutz von Durchführungen für Kabel- oder Leitungselementen durch Wände oder Decken, insbesondere an einfachen und preiswerten, dennoch aber zuverlässigen Brandschutzvorrichtungen zum Brandschutz von Durchführungen für Kabel- oder Leitungselementen durch Wände oder Decken.

Zur Lösung der Aufgabe stellt die vorliegende Erfindung eine Brandschutzvorrichtung zur Abschottung eines Durchbruchs in einer Wand oder Decke zur Durchführung von Kabel- oder Leitungselementen bereit, umfassend
a. einen ein Flammschutzmittel umfassenden elastischen Polymerschaumkörper, und
b. mindestens zwei an dem elastischen Polymerschaumkörper angeordnete Haltewinkel aus einem nicht-brennbaren Material zur Befestigung des elastischen Polymerschaumkörpers (2) an der Wand oder Decke vor der Öffnung.

Die erfindungsgemäße Brandschutzvorrichtung ist einfach in der Herstellung und Anwendung und kann vorteilhaft zum Brandschutz von Wand- oder Deckendurchbrüchen eingesetzt werden. Die Erfindung kann vorteilhaft bei Wand- und Deckenkonstruktionen in Massiv- oder Leichtbauweise eingesetzt werden. Die erfindungsgemäße Vorrichtung umfasst einen elastischen Polymerschaumkörper und zwei an dem elastischen Polymerschaumkörper angeordnete Haltewinkel zur Befestigung des elastischen Polymerschaumkörpers an der Wand oder Decke vor der Öffnung des Durchbruchs. Der Polymerschaumkörper umfasst mindestens ein Flammschutzmittel, beispielsweise einen Dämmschichtbildner. Auf intumeszierende Einlagen zwischen Haltewinkel und Polymerschaumkörper oder Wand bzw. Decke kann verzichtet werden. Die Vorrichtung kann einseitig oder zweiseitig vor Durchbruchsöffnungen angeordnet sein und an verschiedene Einsatzsituationen angepasst werden. Kabel oder Leitungen können durch den elastischen Polymerschaumkörper hindurchgeführt werden, indem entsprechende Aussparungen in den Polymerschaumkörper geschnitten werden. Restspalte zwischen Kabeln und/oder Leitungen und dem Polymerschaumkörper können in bekannter Weise mit einer Dichtmasse, beispielsweise aus einem intumeszierendem Material, verfüllt werden. Die elastischen Eigenschaften des Polymerschaumkörpers ermöglichen eine Befestigung, bei der die Rückstellkräfte des Polymerschaumkörpers genutzt werden, um diesen fest an die Wand- oder Decke zu pressen.

Unter einem "ein Flammschutzmittel umfassenden elastischen Polymerschaumkörper" wird hier ein elastisches Formteil aus einem flammwidrig eingestellten, also mit mindestens einem Flammschutzmittel ausgestatteten, Polymerschaum, beispielsweise Polyurethanschaum, verstanden. Derartige Polymerschaumkörper sind auch als "Brandschutzstein" bekannt.

Unter "Kabel- und Leitungselementen" werden sich in eine Längsrichtung erstreckende Elemente verstanden, die in Bauten oder anderen Konstruktionen zur Leitung von Elektrizität oder Fluiden verwendet werden. Beispiele hierfür sind elektrische Kabel und Rohre für die Leitung von Wasser, Gas und dergleichen.

Unter einem "Flammschutzmittel", gegebenenfalls auch als "Flammschutzadditiv" bezeichnet, wird hier ein Stoff oder eine Stoffzusammensetzung verstanden, der bzw. die eine brandhemmende Wirkung, also eine die Ausbreitung eines Brandes einschränkende, verlangsamende oder verhindernde Wirkung entfaltet. Beispiele für Flammschutzmittel sind intumeszierende Materialien (Dämmschichtbildner) wie Blähgraphit oder Wasser abspaltende Stoffe (Ablationsbaustoffe) wie Aluminiumhydroxid. Der Begriff umfasst auch zwei oder mehrere verschiedene unabhängig voneinander oder synergistisch zusammen brandhemmend wirkende Stoffe oder Stoffzusammensetzungen.

Unter einem "Dämmschichtbildner" oder "intumeszierenden Material" wird hier ein Material verstanden, das bei Raumtemperatur ein vergleichsweise geringes Volumen aufweist und unter Hitzeeinwirkung, vorzugsweise beginnend bei 150 °C bis 200 °C, eine deutliche Volumenzunahme erfährt, vorzugsweise unter Erzeugung eines erheblichen Blähdrucks von z.B. 1-2 N/mm². In der Regel wird bei einem solchen Material unter Wärmeeinwirkung, d.h. bei Überschreiten einer bestimmten als "Reaktionstemperatur" bezeichneten Temperatur, z.B. 150 °C, eine stark wärmedämmende, thermisch weitgehend stabile Schaumschicht gebildet, die die dahinter liegenden bzw. davon umschlossenen Materialien schützt. Der Schaumfaktor, d.h. das Verhältnis zwischen der Schichtdicke des Dämmschichtbildners im aufgeschäumten Zustand und der Schichtdicke des Dämmschichtbildners vor dem Aufschäumen, beträgt vorzugsweise mindestens 1,5, weiter bevorzugt mindestens 2, 3, 4, 5, 6, 8 oder mindestens 10, besonders bevorzugt mindestens 15, 20, 30, 40, 50 oder 60. Ein Beispiel für ein intumeszierendes Material ist Blähgraphit.

Unter einem "Ablationsbaustoff" oder "Ablationsbildner" werden ablativ wirkende Materialien verstanden, die bei Hitzeeinwirkung nur vergleichsweise gering expandieren, jedoch durch chemische und/oder physikalische Prozesse der Umgebung Wärmeenergie entziehen und dadurch eine Kühlung des mit dem Ablationsbaustoff beschichteten Trägermaterials bewirken. Der Ablationsbaustoff kann sich beispielsweise durch endotherme Reaktionen chemisch verändern, beispielsweise keramisieren, oder verdampfen, sublimieren oder schmelzen. Der Ablationsbaustoff kann beispielsweise Hydrate beinhalten, die bei Erhitzung Wasserdampf freisetzen. Darüber hinaus kann der Ablationsbaustoff gegebenenfalls Substanzen abgeben, die eine flammhemmende Wirkung haben. Nach Abschluss der chemischen und/oder physikalischen Prozesse bleibt häufig eine nichtbrennbare Masse zurück, die zusätzlich thermisch isolierend wirkt.

Unter der "Reaktionstemperatur eines Flammschutzmittels" oder der "Reaktionstemperatur einer Flammschutzmittelschicht" wird hier die Temperatur verstanden, bei der die flammhemmende Wirkung des Flammschutzmittels einsetzt, beispielsweise ein Stoff intumesziert oder Wasser freisetzt. Im Falle mehrerer verschiedener Flammschutzmittel bezieht sich dieser Ausdruck vorzugsweise auf den Stoff oder die Stoffzusammensetzung mit dem höchsten Anteil und/oder mit der niedrigsten Reaktionstemperatur.

Unter einem "regulären Prisma" wird ein geometrischer Körper verstanden, der durch Parallelverschiebung eines regelmäßigen ebenen Polygons entlang einer senkrecht auf der Grundfläche des Polygons stehenden Geraden im Raum entsteht. Wenn hier von einem x-eckigen regulären Prisma gesprochen wird, ist damit ein reguläres Prisma gemeint, dessen Grundfläche x-eckig ist, also eine Anzahl von x Ecken aufweist, wobei x eine ganze Zahl ist. Der Begriff "sechseckiges Prisma" beispielsweise bezieht sich auf ein reguläres Prisma mit einem regelmäßigen Sechseck als Grundfläche. Unter den Begriff fallen beispielsweise Quader und Würfel. Der Begriff "Quader" schließt Würfel ein.

Die erfindungsgemäße Brandschutzvorrichtung umfasst einen ein-, zwei- oder mehrteiligen mit einem Flammschutzmittel flammwidrig eingestellten elastischen Polymerschaumkörper ("Brandschutzstein"), der mittels Haltewinkeln, die nicht zu einem Rahmen verbunden sind, vor einer Wand- oder Deckendurchbruchsöffnung an der Wand oder Decke befestigt werden kann. Der Polymerschaumkörper kann beispielsweise einen Dämmschichtbildner umfassen, so dass der Polymerschaumkörper im Brandfall aufschäumt und den Durchbruch verschließt.

Der elastische Polymerschaumkörper kann eine beliebige geeignete Form haben. Bevorzugt weist der elastische Polymerschaumkörper jedoch die Form eines regulären Prismas, beispielsweise eines vier-, fünf-, sechs-, sieben- oder achteckigen Prismas auf. Besonders bevorzugt handelt es sich bei dem Polymerschaumkörper um einen quaderförmigen Formkörper. Der elastische Polymerschaumkörper ist so dimensioniert, dass er eine Durchbruchsöffnung vollständig abdeckt und gegebenenfalls an den Rändern der Öffnung übersteht. Der Überstand kann beispielsweise 2-20 mm, vorzugsweise 5-20 mm, betragen.

Die Anzahl der Haltewinkel hängt von der Form des Polymerschaumkörpers und von Einsatzsituation ab. Im Fall eines quaderförmigen Polymerschaumkörpers ist es bevorzugt, an mindestens zwei Seitenflächen des Quaders Haltewinkel anzuordnen. Bevorzugt sind an mindestens drei, besonders bevorzugt an allen vier Seitenflächen Haltewinkel angeordnet. Die Haltewinkel sind dabei voneinander beabstandet angeordnet. Bei der erfindungsgemäßen Brandschutzvorrichtung werden separate Haltewinkel verwendet und es ist kein Rahmen gebildet wie bei Brandschutzmanschetten aus dem Stand der Technik. Dadurch ist die erfindungsgemäße Brandschutzvorrichtung flexibler im Einsatz und einfacher zu installieren.

Die Haltewinkel können aus jedem geeigneten nicht-brennbaren Material sein. Bevorzugt sind die Haltewinkel aus Metall, beispielsweise Stahl.

Das Flammschutzmittel des Polymerschaumkörpers kann ein Ablationsbildner oder ein Dämmschichtbildner, oder eine Mischung daraus sein. Vorzugsweise ist das Flammschutzmittel ein Dämmschichtbildner.

Der Polymerschaumkörper kann ein-, zwei- oder mehrteilig sein. Vorzugsweise ist der Polymerschaumkörper einteilig oder zweiteilig.

In einer bevorzugten Ausführungsform der erfindungsgemäßen Brandschutzvorrichtung ist die Tiefe x des elastischen Polymerschaumkörpers größer als die Länge y des Seitenschenkels, mit dem der Haltewinkel an der Seitenfläche des elastischen Polymerschaumkörpers anliegt. Bevorzugt ist die Tiefe x des Polymerschaumkörpers um 1-8 mm, vorzugsweise 2-6 mm, größer ist als die Länge y des Seitenschenkels des Haltewinkels. Bei dieser Ausführungsform ergibt sich bei Befestigung der Brandschutzvorrichtung an einer Wand oder Decke eine Vorspannung des elastischen Polymerschaumkörpers, da der elastische Polymerschaumkörper bei seiner Befestigung um die Differenz aus der Tiefe x und der Länge y in Längsrichtung des Haltewinkels bzw. in Richtung Wand oder Decke zusammengepresst wird. Die durch die Rückstellkräfte des elastischen Polymerschaumkörpers resultierende Verspannung sorgt für eine verbesserte Anpressung des elastischen Polymerschaumkörpers an die Wand oder Decke.

In einem zweiten Aspekt betrifft die Erfindung eine Brandschutzanordnung, umfassend eine erfindungsgemäße Brandschutzvorrichtung wie oben beschrieben, und eine Wand oder Decke mit einem Durchbruch zur Durchführung von Kabel- oder Leitungselementen. Die erfindungsgemäße Brandschutzanordnung umfasst somit
a. einen ein Flammschutzmittel umfassenden elastischen Polymerschaumkörper,
b. mindestens zwei Haltewinkel aus einem nicht-brennbaren Material zur Befestigung des elastischen Polymerschaumkörpers, und
c. eine Wand oder Decke mit einem Durchbruch zur Durchführung von Kabel- oder Leitungselementen,
wobei der elastische Polymerschaumkörper mittels der mindestens zwei Haltewinkel vor einer Öffnung des Durchbruchs und die Öffnung vollständig abdeckend an der Wand oder Decke angeordnet ist.

Die oben für die erfindungsgemäße Brandschutzvorrichtung beschriebenen bevorzugten Merkmale und Eigenschaften haben auch entsprechende Gültigkeit für die erfindungsgemäße Brandschutzanordnung, so dass hier auf eine unnötige Wiederholung verzichtet wird.

In einer bevorzugten Ausführungsform der erfindungsgemäßen Brandschutzanordnung ist der Polymerschaumkörper quaderförmig und an zwei Seitenflächen des Polymerschaumkörpers, vorzugsweise an zwei gegenüberliegenden Seitenflächen des Polymerschaumkörpers, ist jeweils ein Haltewinkel angeordnet. Bei weiteren bevorzugten Ausführungsformen, beispielsweise solchen, bei denen die erfindungsgemäße Brandschutzvorrichtung anstoßend an aufgehende Wände und/oder an Decken angeordnet wird, zum Beispiel im Bereich von Raumecken, kann es bevorzugt sein, zwei Haltewinkel an zwei benachbarten Seiten anzuordnen. Bei solchen Ausführungsformen können beispielsweise zwei benachbarte Seitenflächen eines quaderförmigen Polymerschaumkörpers an einer Wand und einer Decke anstoßend angeordnet sein.

In einer weiteren bevorzugten Ausführungsform der erfindungsgemäßen Brandschutzanordnung ist der Polymerschaumkörper quaderförmig, und an drei Seitenflächen des Polymerschaumkörpers, vorzugsweise an allen vier Seitenflächen des Polymerschaumkörpers, ist jeweils ein Haltewinkel angeordnet.

In einer weiteren bevorzugten Ausführungsform der erfindungsgemäßen Brandschutzanordnung ist der Polymerschaumkörper so dimensioniert, dass er über die Ränder der Öffnung des Durchbruchs übersteht.

In einer weiteren bevorzugten Ausführungsform umfasst die erfindungsgemäße Brandschutzanordnung mindestens ein durch den Polymerschaumkörper hindurchgeführtes Kabel- oder Leitungselement.

In einem weiteren Aspekt betrifft die Erfindung die Verwendung einer erfindungsgemäßen Brandschutzvorrichtung zum Brandschutz eines Durchbruchs durch eine Wand- oder Decke zur Durchführung von Kabel- oder Leitungselementen. Die Brandschutzvorrichtung kann zum Brandschutz eines Durchbruchs durch eine Massivwand- oder -decke oder zum Brandschutz eines Durchbruchs durch eine Wand oder Decke in Leichtbauweise verwendet werden.

Die Erfindung wird im Folgenden anhand von Figuren und bevorzugten Ausführungsformen beispielhaft näher erläutert.
Figur 1 zeigt eine Ausführungsform einer erfindungsgemäßen Brandschutzvorrichtung.
Figur 2 zeigt eine weitere Ausführungsform einer erfindungsgemäßen Brandschutzvorrichtung.
Figur 3 zeigt eine Ausführungsform einer erfindungsgemäßen Brandschutzanordnung.
Figur 4 zeigt eine weitere Ausführungsform einer erfindungsgemäßen Brandschutzanordnung.
Figur 5 zeigt ein Beispiel eines Haltewinkels und eines Teils eines elastischen Polymerschaumkörpers.

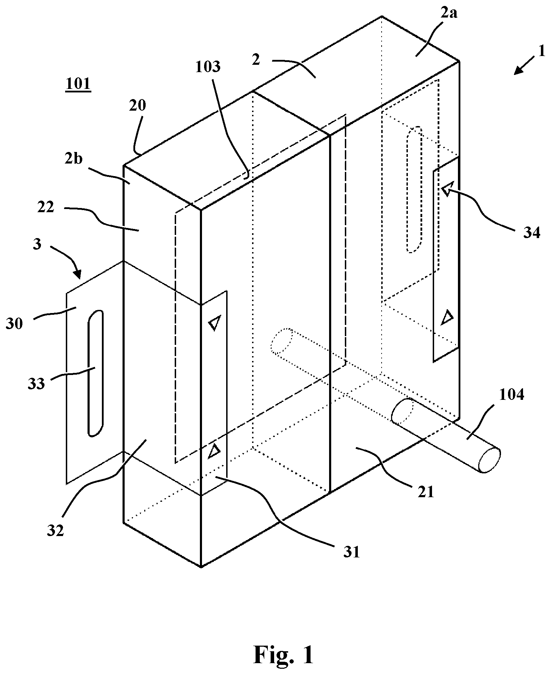

Figur 1 zeigt schematisch und vereinfacht eine räumliche Ansicht einer erfindungsgemäßen Brandschutzvorrichtung 1. Gezeigt ist hier eine aus zwei Teilen, d.h. einzelnen Brandschutzsteinen 2a, 2b, zusammengesetzter elastischer Polymerschaumkörper 2. Der Polymerschaumkörper 2 ist bei dieser Ausführungsform ein quaderförmiger mit einem Dämmschichtbildner flammwidrig eingestellter PU-Schaum-Formkörper. Der Polymerschaumkörper 2 ist vor einer hier nur mit strichlierten Linien angedeuteten Öffnung 103 eines Durchbruchs 102 durch eine Wand oder Decke 101 angeordnet. Der Polymerschaumkörper 2 ist so dimensioniert, dass er über die Ränder der Öffnung 103 übersteht. Er liegt in dem überstehenden Teil mit seiner Rückfläche 20 an der Wand oder Decke 101 an und deckt mit seinem übrigen Teil die Öffnung 103 ab. Der Polymerschaumkörper 2 ist bei dieser Ausführungsform mit zwei allgemein z- oder zickzack-förmig ausgebildeten Haltewinkeln 3 an der Wand oder Decke 101 angeordnet. Die Haltewinkel 3 sind an zwei gegenüberliegenden Seitenflächen 22 des Polymerschaumkörper 2 angebracht. Mittels dreieckförmiger teilweiser Ausstanzungen 34, die zum Polymerschaumkörper 2 hingebogen sind, ist der Polymerschaumkörper 2 zusätzlich gegen etwaiges Verrutschen in der Vertikalen parallel zur Wand oder Decke 101 gesichert. Die Haltewinkel weisen drei senkrecht aufeinander stehende Schenkel 30, 31, 32 auf. Der Rückschenkel 30 ist mit seiner Rückfläche zur Wand oder Decke 101 gerichtet und weist ein Langloch 33 auf. Hier nicht dargestellte Befestigungsmittel 106, z.B. Schrauben, können durch das Langloch hindurch und in die Wand oder Decke 101 geführt werden. Ein Seitenschenkel 32 liegt an einer der Seitenflächen 22 des Polymerschaumkörpers 2 an. Ein Vorderschenkel 31 umgreift die Vorderfläche 21 des Polymerschaumkörpers 2. Die Vorderschenkel 31 weisen die bereits erwähnten teilweisen Ausstanzungen auf, die zum Polymerschaumkörpers 2 hin umgebogen sind, so dass Dornen gebildet sind, die in Eingriff mit dem Polymerschaumkörper 2 gebracht sind. Dargestellt ist hier rein exemplarisch und ohne weitere Details ein durch die Öffnung 103 und den Polymerschaumkörper 2 hindurchgeführtes Kabel- oder Leitungselement 104, beispielsweise ein Rohr.

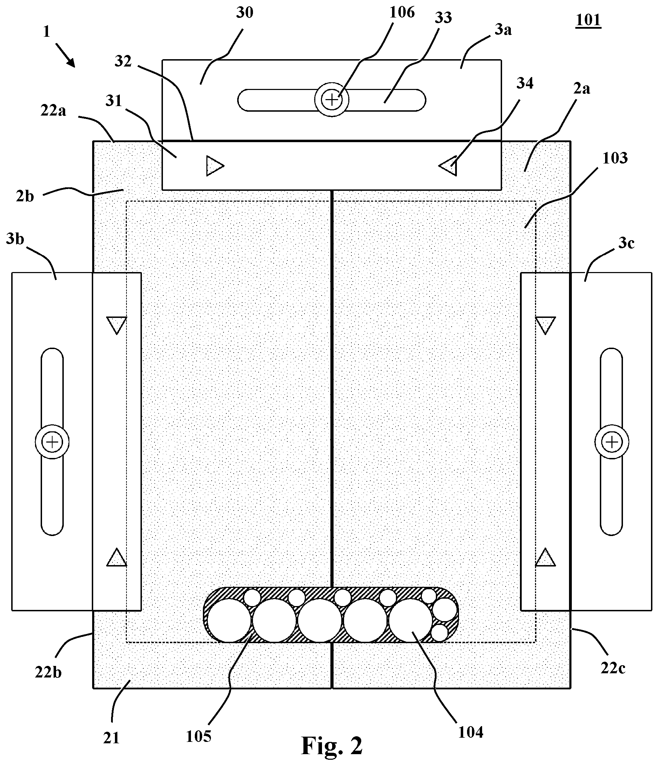

Figur 2 zeigt eine weitere Ausführungsform einer erfindungsgemäßen Brandschutzvorrichtung 1. Gezeigt ist eine Aufsicht auf die Frontseite der Brandschutzvorrichtung 1, d.h. auf die Vorderfläche 21 des Polymerschaumkörpers 2. Anders als bei der in Figur 1 dargestellten Ausführungsform sind hier drei Haltewinkel 3 vorgesehen, die an jeweils einer Seitenfläche 22 des Polymerschaumkörpers 2 angeordnet sind. Ein erster Haltewinkel 3a ist hier an einer oberen Seitenfläche 22a, ein zweiter Haltewinkel 3b und ein dritter Haltewinkel 3c sind an gegenüberliegenden seitlichen Seitenflächen 22b, 22c des Polymerschaumkörpers 2 angeordnet. Die Haltewinkel 3 sind mittels Befestigungsmitteln 106, die mit dem im Rückschenkel 30 jedes der Haltewinkel 3 eingebrachten Langloch 33 in Eingriff gebracht sind, an der Wand oder Decke 101 befestigt. Der Polymerschaumkörper 2 ist hier aus zwei Teilen 2a, 2b zusammengesetzt, kann aber auch einteilig oder aus mehr als zwei Teilen ausgebildet sein. Der elastische Polymerschaumkörper 2 ist im nicht eingebauten Zustand tiefer als im eingebauten Zustand, so dass er im eingebauten Zustand unter einer Rückstellspannung steht. Im unteren Bereich sind schematisch aus der Öffnung 103 eines Durchbruchs 102 heraustretende und durch den Polymerschaumkörper 2 hindurchgeführte Kabel- oder Leitungselemente 104 dargestellt, die verschiedene Durchmesser aufweisen. Zu diesem Zweck ist ein Bereich aus dem Polymerschaumkörper 2 herausgeschnitten. Vorzugsweise erfolgt der Zuschnitt möglichst eng entlang der Konturen der Kabel- oder Leitungselemente 104. Die in dieser Darstellung der Deutlichkeit halber überdimensioniert gezeichneten Restspalte zwischen den Kabel- oder Leitungselementen 104 und dem Polymerschaumkörper 2 werden mit einer geeigneten Dichtmasse 105, die mit einem Flammschutzmittel, z.B. einem intumeszierendem Material, flammwidrig eingestellt ist, verfüllt.

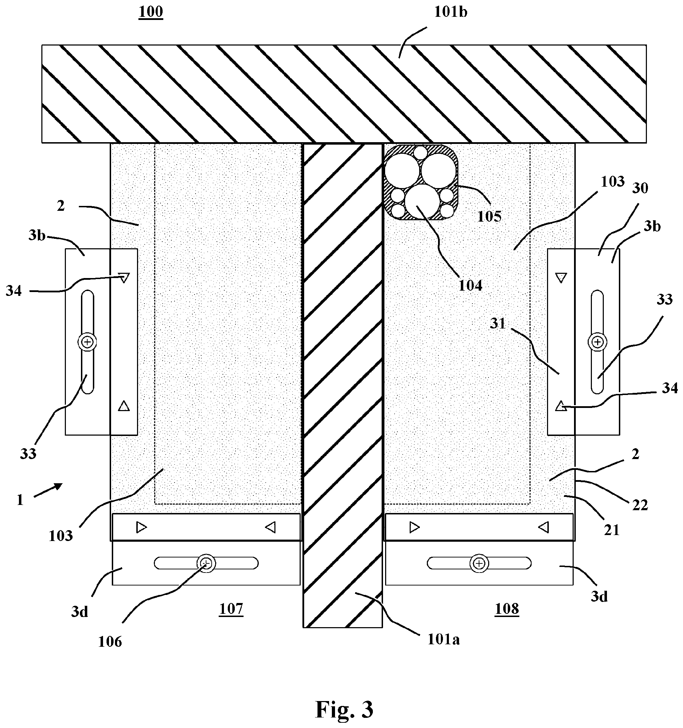

Figur 3 zeigt eine Ausführungsform einer Brandschutzanordnung 100 gemäß der Erfindung. Dargestellt ist ein Schnitt durch eine zwei Räume 107, 108 trennende aufsteigende Wand 101a und eine Decke 101b. In die Räume 107, 108 mündende Öffnungen 103 eines hier nicht weiter sichtbaren Durchbruchs 102 sind jeweils mit einer Brandschutzvorrichtung 1 brandgeschützt. Gleiche Bezugsziffern bezeichnen gleiche Elemente der Brandschutzvorrichtung 1 wie in den Figuren 1 und 2, so dass für weitere Details auf die dortige Beschreibung verwiesen wird. Jede der Brandschutzvorrichtungen 1 umfasst einen elastischen Polymerschaumkörper 2, der mittels Haltewinkeln 3 vor der jeweiligen Öffnung 103 des jeweiligen Durchbruchs 102 angeordnet ist, so dass die jeweilige Öffnung 103 vollständig abgedeckt ist. Jede Brandschutzvorrichtung 1 ist hier von zwei Haltewinkeln 3b, 3d gehalten, die an benachbarten, im rechten Winkel zueinander stehenden Seitenflächen 22 des Polymerschaumkörpers 2 angeordnet sind. Die ersten Haltewinkel 3b sind jeweils seitlich an den parallel zur Wand 101a verlaufenden Seitenflächen 22 des Polymerschaumkörpers 2, die zweiten Haltewinkel 3d im rechten Winkel hierzu an den unteren Seitenflächen 22 des Polymerschaumkörpers 2 angeordnet. Die übrigen beiden Seitenflächen 22 der Polymerschaumkörper 2 stoßen an die Wand 101a und die Decke 101b an und bleiben ohne Haltewinkel 3. Lediglich für die Brandschutzvorrichtung 1 in dem hier rechts dargestellten Raum 108 sind schematisch Kabel- oder Leitungselemente 104 dargestellt, die durch den Durchbruch 102 hindurchgeführt sind. Hierzu sind entsprechende Bereiche aus dem Polymerschaumkörper 2 herausgetrennt und Restspalte zwischen Kabel- oder Leitungselementen 104 und Polymerschaumkörper 2 und/oder Wand 101a oder Decke 101b mittels Dichtmasse 105 brandschutzgerecht abgedichtet.

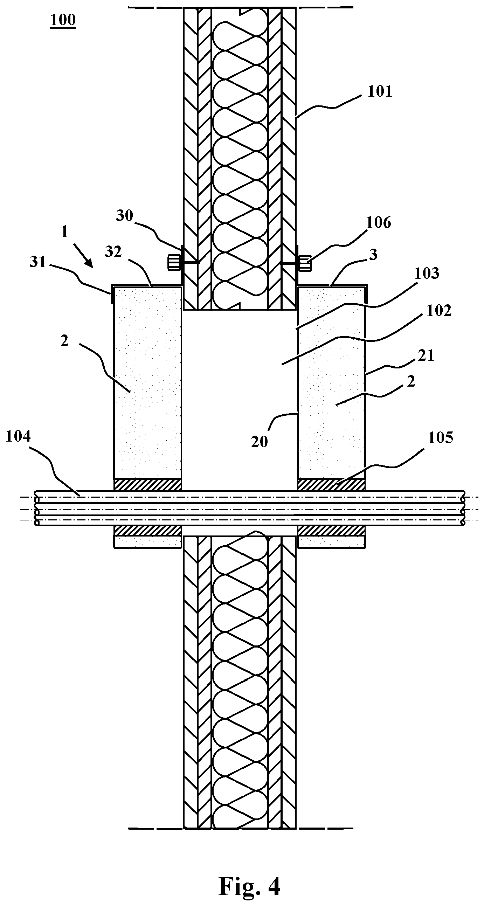

Figur 4 zeigt eine weitere Ausführungsform einer Brandschutzanordnung 100 gemäß der Erfindung. Dargestellt ist ein Schnitt durch eine Wand 101, hier eine Leichtbauwand, mit einem Durchbruch 102 zur Durchführung von Kabel- oder Leitungselementen 104, mit beidseitig vor den Öffnungen 103 angeordneten erfindungsgemäßen Brandschutzvorrichtungen 1. Die Verfüllung von Restspalten zwischen Kabel- oder Leitungselementen 104 und Polymerschaumkörper 2 erfolgt mittels Dichtmasse 105. Gleiche Bezugsziffern bezeichnen gleiche Elemente wie in den Figuren 1, 2 und 3, so dass für weitere Details auf die dortige Beschreibung verwiesen wird. Bei beidseitiger Anordnung der Brandschutzvorrichtung 1, wie hier dargestellt, muss der Öffnungsquerschnitt des Durchbruchs 102 innerhalb der Wand oder Decke 101 nicht verfüllt werden. Bereits vorhandene Verfüllmaterialien müssen nicht entfernt werden und können verbleiben. Bei einseitiger Anordnung der Brandschutzvorrichtung 1 ist in der Regel eine Verfüllung des Öffnungsquerschnitts des Durchbruchs 102 erforderlich, beispielsweise mit Mineralfasermaterial oder Formteilen aus intumeszierendem Material.

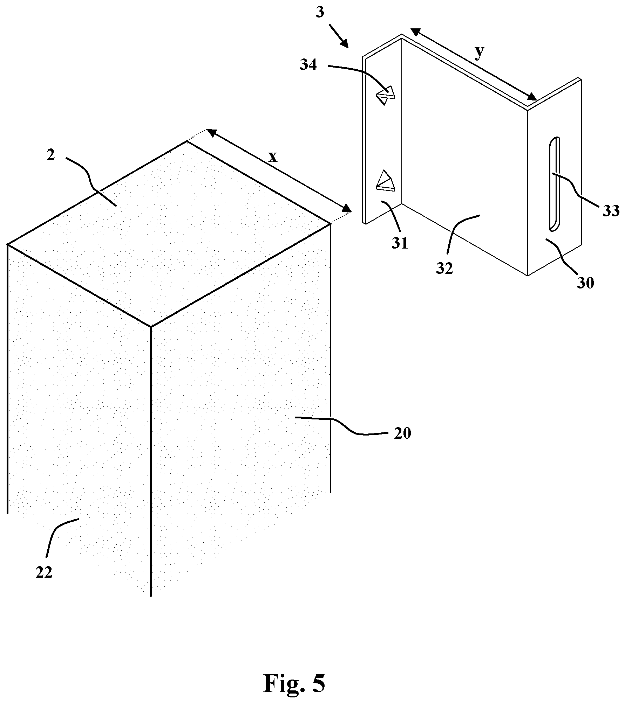

Figur 5 zeigt einen Haltewinkel 3 und einen Teil eines Polymerschaumkörper 2. Wie bereits beschrieben, weist der allgemein z-förmige Haltewinkel 3 einen Rückschenkel 30 mit einem Langloch 33, einen senkrecht darauf stehenden Seitenschenkel 32 und einen auf dem Seitenschenkel 32 senkrecht stehenden in Richtung vom Rückschenkel 30 wegweisenden Vorderschenkel 31 auf. Im Vorderschenkel 31 sind mittels nach innen umgebogener teilweiser Ausstanzungen 34 nach innen weisende Dorne gebildet, die mit dem Polymerschaumkörper 2 in Eingriff gebracht werden können. Die Tiefe x des freien, noch nicht installierten elastischen Polymerschaumkörpers 2 ist größer als die Länge y des Seitenschenkels 32, mit dem der Haltewinkel 3 an der Seitenfläche 22 des elastischen Polymerschaumkörpers nach dem Einbau anliegt. Beispielsweise kann die Tiefe x des Polymerschaumkörpers um 1-8 mm, vorzugsweise 2-6 mm, größer sein als die Länge y des Seitenschenkels 32 des Haltewinkels 3. Im installierten Zustand ergibt sich bei Befestigung der Brandschutzvorrichtung 1 an einer Wand oder Decke 101 eine Vorspannung des elastischen Polymerschaumkörpers 2, da der elastische Polymerschaumkörper 2 bei seiner Befestigung um die Differenz aus der Tiefe x und der Länge y in Längsrichtung des Haltewinkels 3 bzw. in Richtung Wand oder Decke 101 zusammengepresst wird.

## Patentansprüche

1. Brandschutzvorrichtung (1) zur Abschottung eines Durchbruchs (102) in einer Wand oder Decke (101) zur Durchführung von Kabel- oder Leitungselementen (104), umfassend
a. einen ein Flammschutzmittel umfassenden elastischen Polymerschaumkörper (2), und
b. mindestens zwei an dem elastischen Polymerschaumkörper (2) angeordnete Haltewinkel (3) aus einem nicht-brennbaren Material zur Befestigung des elastischen Polymerschaumkörpers (2) an der Wand oder Decke (101) vor dem Durchbruch (102).

2. Brandschutzvorrichtung (1) nach Anspruch 1, wobei der Polymerschaumkörper (2) die Form eines regulären Prismas, bevorzugt die Form eines Quaders aufweist.

3. Brandschutzvorrichtung (1) nach einem der Ansprüche 1 oder 2, wobei das Flammschutzmittel ein Ablationsbildner oder ein Dämmschichtbildner, vorzugsweise ein Dämmschichtbildner ist.

4. Brandschutzvorrichtung (1) nach einem der vorhergehenden Ansprüche, wobei der Polymerschaumkörper (2) ein-, zwei- oder mehrteilig ist.

5. Brandschutzvorrichtung (1) nach einem der vorhergehenden Ansprüche, wobei die mindestens zwei Haltewinkel (3) aus Metall, bevorzugt aus Stahl sind.

6. Brandschutzvorrichtung (1) nach einem der vorhergehenden Ansprüche, wobei die Tiefe x des elastischen Polymerschaumkörpers (2) 1-8 mm, vorzugsweise 2-6 mm, größer ist als die Länge y des Seitenschenkels (32), mit dem der Haltewinkel (3) an der Seitenfläche (22) des elastischen Polymerschaumkörpers anliegt.

7. Brandschutzanordnung (100) umfassend eine Brandschutzvorrichtung nach einem der vorhergehenden Ansprüche und eine Wand oder Decke (101) mit einem Durchbruch (102) zur Durchführung von Kabel- oder Leitungselementen (104), wobei der elastische Polymerschaumkörper (2) mittels der mindestens zwei Haltewinkel (3) vor dem Durchbruch (102) und eine Öffnung (103) des Durchbruchs (102) vollständig abdeckend an der Wand oder Decke (101) angeordnet ist.

8. Brandschutzanordnung (100) nach Anspruch 7, wobei der Polymerschaumkörper (2) quaderförmig ist und an zwei Seitenflächen (22) des Polymerschaumkörpers (2), vorzugsweise an zwei gegenüberliegenden Seitenflächen (22) des Polymerschaumkörpers (2), jeweils ein Haltewinkel (3) angeordnet ist.

9. Brandschutzanordnung (100) nach Anspruch 8, wobei der Polymerschaumkörper (2) quaderförmig ist, und an drei Seitenflächen (22) des Polymerschaumkörpers (2), vorzugsweise an allen vier Seitenflächen (22) des Polymerschaumkörpers (2), jeweils ein Haltewinkel (3) angeordnet ist.

10. Brandschutzanordnung (100) nach einem der Ansprüche 8 oder 9, ferner umfassend mindestens ein durch den Polymerschaumkörper (2) hindurchgeführtes Kabel- oder Leitungselement (104).

11. Brandschutzanordnung (100) nach einem der Ansprüche 8 bis 10, wobei der Polymerschaumkörper (2) so dimensioniert ist, dass er über die Ränder der Öffnung (103) übersteht.

12. Verwendung einer Brandschutzvorrichtung nach einem der Ansprüche 1 bis 6 zum Brandschutz eines Durchbruchs (102) einer Wand- oder Decke (101) zur Durchführung von Kabel- oder Leitungselementen (104).
